# EUROPÄISCHE PATENTSCHRIFT

(11) **EP 0 810 229 B1**
(45) Veröffentlichungstag und Bekanntmachung des Hinweises auf die Patenterteilung: **22.11.2000**
(21) Anmeldenummer: 97108702.8
(22) Anmeldetag: 30.05.1997
(51) Int. Cl.: C07F 7/16

(54) **Verfahren zur Herstellung von Methylchlorsilanen**
Process for preparing methylchlorosilanes
Procédé de préparation de méthylchlorosilanes

(30) Priorität: 30.05.1996 DE 19621795
(43) Veröffentlichungstag der Anmeldung: 03.12.1997
(73) Patentinhaber: Wacker-Chemie GmbH, 81737 München (DE)
(72) Erfinder: Straussberger, Herbert, 84561 Mehring/Öd (DE); Pachaly, Bernd, Dr., 84561 Mehring/Öd (DE); Streckel, Willi, 84561 Mehring/Öd (DE); Reindl, Markus, 84489 Burghausen (DE)
(74) Vertreter: Fritz, Helmut, Dr.

(56) Entgegenhaltungen:
- EP-A- 0 440 414
- DE-A- 2 933 342
- FR-A- 2 398 020
- US-A- 4 281 149
- US-A- 5 239 102
- US-A- 5 243 061

## Beschreibung

Die Erfindung betrifft ein Verfahren zur Direktsynthese von Methylchlorsilanen nach Müller-Rochow, bei dem während einer Produktionskampagne gesammelte Kontaktmasse zugesetzt wird.

Bei der Müller-Rochow-Direktsynthese wird Methylchlorid und Silicium in Gegenwart eines Kupferkatalysators und geeigneten Promotoren zu Methylchlorsilanen umgesetzt. Die Direktsynthese ist der einzige bedeutende Herstellungsprozeß für die monomeren Ausgangsstoffe der Polysiloxane. Das wichtigste Zielprodukt der Direktsynthese ist Dimethyldichlorsilan.

Trotz der hohen wirtschaftlichen Bedeutung der Direktsynthese sind deren naturwissenschaftlichen Hintergründe teilweise noch nicht erforscht. Nach H. Lieske et al. in Silicon for Chemical Industry, Geiranger-Norway , 16.-18. June 1992 ist aufgrund der Teilnahme von drei Feststoffen an der Reaktion, nämlich Silicium, Katalysator und Promotoren die Reproduzierbarkeit der Experimente oft schlecht. In der Praxis laufen unterschiedliche Ansätze der Direktsynthese trotz gleicher Stoff- und Reaktionsparameter mit unterschiedlichen Ergebnissen ab.

Die Direktsynthese kann diskontinuierlich oder kontinuierlich durchgeführt werden, in der industriellen Produktion wird nur die kontinuierliche Ausführungsform angewendet. Die kontinuierliche Direktsynthese wird in Wirbelschichtreaktoren durchgeführt, in denen Methylchlorid gleichzeitig als Fluidisierungsmedium und Reaktant eingesetzt wird. Das benötigte Silicium wird zuvor zu einem Pulver der Korngröße 25 bis 500 µm vermahlen und mit Kupferkatalysator und Promotoren zur Kontaktmasse vermischt.

Beim kontinuierlichen Betrieb eines Reaktors fallen nach einer weitgehend stabilen Produktionsphase die Produktionsrate bezogen auf Methylchlorsilane und die Selektivität des Direktsyntheseprozesses in Bezug auf das Zielprodukt Dimethyldichlorsilan ab. Deshalb muß die Produktionskampagne nach einer bestimmten Zeit beendet werden. Eine Produktionskampagne dauert deshalb meist nur wenige Tage bis mehrere Wochen.

Der Reaktor wird nach Beendigung einer Produktionskampagne entleert, neu mit Silicium, Kupferkatalysator und Promotoren befüllt und wieder auf Reaktionsbedingungen gebracht. Erst nach einer bestimmten Zeit der Aktivierung, die als Startphase bezeichnet wird, erreicht der Reaktor dann wieder die stabile Produktionsphase. In der Startphase sind Selektivität und Produktionsrate deutlich reduziert. Deshalb läuft der Reaktor in der Startphase nicht wirtschaftlich.

In der Startphase muß die Kontaktmasse aktiviert werden. In der Regel erfolgt diese Aktivierung in situ, d.h. in dem Reaktor, in dem auch die Direktsynthese durchgeführt wird, mit Methylchlorid.

Die Aktivierung mit einem anderen Gas ist ebenfalls bekannt. In der US-A-2,380,997 ist ein Verfahren zur Aktivierung von Kontaktmasse durch Erhitzen mit Wasserstoff beschrieben. Die Aktivierung mit Chlorwasserstoff ist aus der US-A-4,864,044 bekannt. Der wesentliche Vorteil dieser externen Aktivierung ist die Verkürzung der Anspringzeit am Beginn einer Produktionskampagne. Als Anspringzeit wird die Periode bezeichnet, in der sich an der Oberfläche des Siliciums aktive Reaktionszentren ausbilden und schließlich die Bildung von Methylchlorsilanen beginnt. Nachteilig ist bei der Aktivierung mit Chlorwasserstoff, daß einige als Promotoren zugesetzte Metalle aus der Kontaktmasse ausgetragen werden und dadurch Selektivität und Produktionsrate ungünstiger werden.

Die Aktivierung der Kontaktmasse mit einem anderen Gas benötigt viel Zeit. Deshalb ist diese Aktivierung nur sinnvoll, wenn sie extern in einem separaten Reaktor durchgeführt wird. In diesem Fall wird die aktivierte Kontaktmasse üblicherweise pneumatisch unter Inertbedingungen in den Reaktor überführt.

Die Vorteile der externen Aktivierung werden allerdings überkompensiert durch den Nachteil, daß dafür ein zusätzlicher Prozeßschritt und die dafür notwendige komplexe Anlagentechnik, sowie zusätzliche Reaktorzeit notwendig ist. Aus diesen Gründen hat sich die externe Aktivierung in der heute üblichen Prozeßtechnologie nicht durchsetzen können.

In der EP-A-440 414 ist ein Verfahren zur externen Aktivierung einer Kontaktmasse mit Methylchlorid beschrieben. Die aktivierte Kontaktmasse wird abgekühlt und gelagert. Da jedoch die Produktivität und Selektivität bezogen auf Dimethyldichlorsilan der aktivierten Massen stark schwanken, müssen schlechtere aktivierte Kontaktmassen entweder trotzdem eingesetzt oder verworfen werden.

In US-A-5,239,102, FR-A-2 398 020, US-A-5,243,061 und DE-A-29 33 342 wird jeweils erschöpfte und verbrauchte Kontaktmasse regeneriert. In US-A-5,239,102 und FR-A-2 398 020 ist der Einsatz von verbrauchter und nachträglich hitzebehandelter Kontaktmasse der Direktsynthese in einer erneuten Direktsynthese beschrieben. Die erschöpfte Kontaktmasse wird dabei recycliert. In US-A-5,243,061 wird erschöpfte Kontaktmasse, welche mit Sauerstoff nicht-pyrophor gemacht wird, in der Direktsynthese eingesetzt. DE-A-29 33 342 beschreibt die Abröstung von erschöpfter Kontaktmasse mit Sauerstoff enthaltendem Gasgemisch und deren Wiedereinsatz in der Direktsynthese.

Im Verfahren von US-A-4 281 149 werden Kupfer- und Siliciumpartikel einer Grösse von weniger 40µm aus der Direktsynthese entfernt, abgerieben und einem Reaktor wieder zugeführt. Dabei werden kohlenstoffhaltige Deckschichten entfernt und somit die Silicium-Oberfläche wieder freigelegt. Nachteilig bei dem Verfahren von US-A-4 281 149 wirkt sich aus, daß sehr feine Anteile im Regelfall den Reaktor wieder sehr schnell mit dem gasförmigen Produktstrom über die Cyclonsysteme verlassen.

Aufgabe der Erfindung war es, ein Verfahren zur Direktsynthese von Methylchlorsilanen nach Müller-Rochow bereitzustellen, welches eine kurze Anfahrphase aufweist und bei dem Produktivität und Selektivität bezogen auf Dimethyldichlorsilan gesteuert werden können, ohne daß Kontaktmasse verworfen werden muß.

Die Erfindung betrifft ein Verfahren zur Direktsynthese von Methylchlorsilanen durch Umsetzung von Methylchlorid mit Kontaktmasse, welche Silicium, Kupferkatalysator und Promotoren umfaßt, bei dem unter Ausschluß von Sauerstoff aufbewahrte Kontaktmasse zugesetzt wird, dadurch gekennzeichnet, daß die zugesetzte Kontaktmasse während einer Produktionskampagne mit hoher Selektivität bezüglich Dimethyldichlorsilan und hoher Reaktivität bezogen auf die Summe der gebildeten Methylchlorsilane gesammelt worden ist.

Die Kontaktmasse einer Produktionskampagne bleibt bis zu mehreren Monaten aktiv, wenn sie unter Ausschluß von Sauerstoff aufbewahrt wird und erreicht, wenn sie erneut in einer Produktionskampagne eingesetzt wird, die vorher gezeigte Selektivität und Reaktivität. Durch Sammeln einer Kontaktmasse einer Produktionskampagne mit bekannten Verfahrensparametern kann durch Zusatz dieser Kontaktmasse zu einer Produktionskampagne deren Verlauf gezielt beeinflußt werden. Der Reaktor kann dadurch optimal betrieben werden.

Die Reaktivität bezieht sich auf die Summe der gebildeten Methylchlorsilane, die Selektivität auf die wichtigsten Zielprodukte, insbesondere Dimethyldichlorsilan.

Vorzugsweise wird die gesammelte Kontaktmasse gegebenenfalls im Gemisch mit frischer Kontaktmasse beim Start einer neuen Produktionskampagne vorgelegt. Dann wird die Startphase der Produktionskampagne verkürzt. Sowohl die Anspringzeit, d.h. die Zeit vom Start bis zur beginnenden Silanbildung, als auch die darauf folgende Anfangsphase, in der eine Rohsilanmischung hergestellt wird, sind reduziert.

Durch Zumischen einer Kontaktmasse, die in einer vergleichsweise bezüglich Selektivität und Reaktivität guten Produktionskampagne gesammelt wurde, werden bessere Selektivität und Reaktivität erzielt, als wenn die Kontaktmasse mit Chlorwasserstoff aktiviert worden wäre.

Verglichen mit der externen Aktivierung der Kontaktmasse ist beim vorliegenden Verfahren für die Ausführung in der industriellen Praxis nur ein zusätzlicher Sammelbehälter für Kontaktmasse notwendig.

Die gesammelte Kontaktmasse wird zu mindestens 5 Gew.-%, vorzugsweise mindestens 10 Gew.-%, insbesondere mindestens 20 Gew.-%, bezogen auf die gesamte eingesetzte Kontaktmasse eingesetzt. Der Rest besteht dann aus frischer Kontaktmasse, welche aus Silicium, Kupferkatalysator und Promotoren hergestellt wird. Beim Start einer neuen Produktionskampagne kann die Kontaktmasse auch aus bis zu 100 Gew.-% gesammelter Kontaktmasse bestehen. Vorzugsweise werden höchstens 90 Gew.-%, insbesondere höchstens 50 Gew.-% gesammelte Kontaktmasse eingesetzt.

Im Verfahren kann auch während der Produktionsphase einer Produktionskampagne vorher gesammelte Kontaktmasse, gegebenenfalls zusammen mit frischer Kontaktmasse nachgeschleust werden. Vorzugsweise wird die nachgeschleuste Kontaktmasse in einer Phase gesammelt, in der Selektivität und Reaktivität gut sind. Dadurch können Selektivität und Reaktivität in der Produktionsphase erhöht werden, wenn diese Parameter beispielsweise schlechter werden. Die Laufzeit einer Kampagne kann dadurch erhöht werden. Die nachgeschleuste Kontaktmasse kann während einer vorangegangenen Produktionskampagne oder in einer vorangegangenen Phase der gleichen Produktionskampagne gesammelt werden.

Die Mengen der nachgeschleusten Kontaktmasse entspechen den beim Start einer neuen Produktionskampagne zugegebenen Mengen an gesammelter Kontaktmasse.

Die gesammelte Kontaktmasse einer Produktionskampagne wird vorzugsweise unter Stickstoff, Argon, Methylchlorid oder Wasserstoff gelagert.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .
d)
   Silan HM2 = Dimethylchlorsilan
   Silan HM = Methyldichlorsilan
   Silan M1 = Methyltrichlorsilan
   Silan M2 = Dimethyldichlorsilan
   Silan M3 = Trimethylchlorsilan

### Beispiele:

Beispiel 1 beschreibt die übliche Ausführungsform mit in-situ-Aktivierung. Beispiel 2 beschreibt die externe Aktivierung mit Chlorwasserstoff unter Verwendung der gleichen Mengenverhältnisse Silicium:Kupferkatalysator:Promotoren. Beispiel 3 a-c beschreibt die Zumischung aktivierter Kontaktmasse zu 25, 50 und 75 %. Zur Bewertung der Ergebnisse wird herangezogen:
a) die Anspringzeit, d.h. die Zeit vom Start bis zur beginnenden Silanbildung,
b) die Bildungszeiten für 5x10 ml Rohsilan, d.h. die Produktionsraten in der Anfangsphase bis zum Erreichen der stabilen Produktionsphase,
c) die Rohsilanzusammensetzung, vor allem Gehalt an unerwünschtem Silan HM und erwünschtem Zielprodukt Silan M2,
d) die elementare Zusammensetzung der Reaktionsmasse nach Bildung der 5x10 ml Rohsilan, d.h. Erreichen der bei der in-situ-Aktivierung üblichen Konzentrationen auch bei Zumischung aktivierter Kontaktmasse.
Durch Zumischung aktivierter Kontaktmasse ergibt sich gegenüber der in-situ-Aktivierung eine deutlich reduzierte Anspringzeit, eine deutlich bessere Produktionsrate, eine bessere Selektivität und eine gleiche Zusammensetzung der Reaktionsmasse. Die externe Aktivierung mit Chlorwasserstoff ergibt mit Ausnahme einer reduzierten Anspringzeit deutlich schlechtere Resultate im Vergleichsbeispiel. Selbst wenn für die externe Aktivierung mit Chlorwasserstoff eine gleiche Ergebnisverbesserung angenommen wird, wie für die erfindungsgemäße Zumischung aktivierter Kontaktmasse, so bleibt immer noch der Nachteil eines zusätzlichen Prozeßschritts und komplizierter Prozeßtechnik.

### Beispiel 1

In einem standartisierten Testverfahren wurde Silicium mit Chlormethan in Gegenwart eines Kupferkatalysators zu Methylchlorsilanen umgesetzt. Dazu wurde ein Laborwirbelschichtreaktor mit 25 mm Innendurchmesser, versehen mit Heizwicklung, Gasverteilungsfritte, Innenthermometer, Destillationsbrücke mit Solekühlung und graduiertem Vorlagegefäß verwendet. Es wurden 120 g Siliciumpulver der Körnung 70 - 240 µm vermischt mit 6 g Kupfer(II)oxid, 1 g Zinkoxid und 6 mg Zinnpulver vorgelegt. Es wurde unter 40 l/h Stickstoff aufgeheizt und bei Erreichen von 350°C Innentemperatur auf 40 l/h Chlormethan gewechselt. Die Zeit bis zur Bildung des Rohsilangemisches wurde erfaßt (Anspringzeit). Dann wurden 5 mal 10 ml Rohsilangemisch durch Wechseln der Vorlage gesammelt, die Bildungszeiten von je 10 ml erfaßt und die gesammelten Proben mittels Gaschromatographie untersucht. Nach Bildung von 50 ml Rohsilangemisch (entsprechend etwa 10 % Siliciumumsatz) wurde der Versuch beendet. Von der verbliebenen Kontaktmasse im Reaktor wurde eine Elementaranalyse durchgeführt. Das Testverfahren wurde zweimal durchgeführt. Die aktivierte Kontaktmasse wurde gesammelt und unter Stickstoff bei 20°C aufbewahrt. Nachstehend sind die Durchschnittswerte der beiden Durchführungen aufgeführt.

| Anspringzeit | | 24 Minuten | | | | |
|---|---|---|---|---|---|---|
| Rohsilanfraktion | Bildungszeit (Minuten) | Silan HM2 (%) | Silan HM (%) | Silan M3 (%) | Silan M1 (%) | Silan M2 (%) |
| 10 ml | 19 | 0.31 | 3.80 | 3.85 | 7.58 | 84.31 |
| 20 ml | 19.5 | 0.30 | 2.14 | 2.11 | 5.21 | 90.24 |
| 30 ml | 19.5 | 0.33 | 1.72 | 1.90 | 4.35 | 91.70 |
| 40 ml | 19.5 | 0.31 | 1.53 | 1.76 | 4.26 | 92.14 |
| 50 ml | 22 | 0.38 | 1.56 | 1.79 | 3.94 | 92.34 |

| Analyse der Reaktionsmasse: | | | | | | |
|---|---|---|---|---|---|---|
| Element | Al | Ca | Fe | Cu | Zn | Sn |
| Gehalt (%) | 0.11 | 0.022 | 0.28 | 1.35 | 0.213 | 0.0014 |

### Beispiel 2: Direktsynthese mit externer Aktivierung mit Chlorwasserstoff (nicht erfindungsgemäß)

Das standartisierte Testverfahren gemäß Beispiel 1 wurde wiederholt, wobei in Abwandlung von Beispiel 1 unter 40 l/h Stickstoff aufgeheizt wurde und bei Erreichen von 350°C Innentemperatur auf 40 l/h Chlorwasserstoff gewechselt wurde und bis zur Bildung von Silangemisch aufgeheizt wurde. Anschließend wurde unter 40 l/h Stickstoff abgekühlt, die Kontaktmasse unter Inertbedingungen in einen anderen Reaktor überführt und der Test wie mit frischer Kontaktmasse gemäß Beispiel 1 begonnen. Die Zeit bis zur Bildung des Rohsilangemisches wurde erfaßt (Anspringzeit).

| Anspringzeit | | 16 Minuten | | | | |
|---|---|---|---|---|---|---|
| Rohsilanfraktion | Bildungszeit (Minuten) | Silan HM2 (%) | Silan HM (%) | Silan M3 (%) | Silan M1 (%) | Silan M2 (%) |
| 10 ml | 109 | 0.05 | 0.92 | 5.33 | 20.13 | 73.56 |
| 20 ml | 87 | 0.04 | 1.44 | 5.12 | 15.09 | 78.32 |
| 30 ml | - | - | - | - | - | - |
| 40 ml | - | - | - | - | - | - |
| 50 ml | - | - | - | - | - | - |

Aufgrund der schlechten Produktionsrate wurde nach 20 ml Rohsilanbildung abgebrochen.

| Analyse der Reaktionsmasse: | | | | | | |
|---|---|---|---|---|---|---|
| Element | Al | Ca | Fe | Cu | Zn | Sn |
| Gehalt (%) | 0.07 | 0.025 | 0.27 | 3.65 | 0.514 | 0.0003 |

Deutlich erkennbar ist die gegenüber Beispiel 1 hohe Konzentration an Cu und Zn und die niedrige Konzentration von Al und Sn.

### Beispiel 3: Direktsynthese mit Zumischung gesammelter Kontaktmasse (erfindungsgemäß)

Die gesammelte Kontaktmasse aus Beispiel 1 wurde in den Mengenverhältnissen 75:25, 50:50 und 25:75 % mit frischer Kontaktmasse unter Inertbedingungen gemischt und der Test wie mit frischer Kontaktmasse gemäß Beispiel 1 begonnen. Die Zeit bis zur Bildung des Rohsilangemisches wurde erfaßt (Anspringzeit).

### Beispiel 3 a: Zumischung von 25 % gesammelter Kontaktmasse

| Anspringzeit | | 19 Minuten | | | | |
|---|---|---|---|---|---|---|
| Rohsilanfraktion | Bildungszeit (Minuten) | Silan HM2 (%) | Silan HM (%) | Silan M3 (%) | Silan M1 (%) | Silan M2 (%) |
| 10 ml | 20 | 0.60 | 3.44 | 4.95 | 11.60 | 79.40 |
| 20 ml | 18 | 0.36 | 1.65 | 3.14 | 6.59 | 88.25 |
| 30 ml | 17 | 0.29 | 0.95 | 2.92 | 5.43 | 90.41 |
| 40 ml | 15 | 0.27 | 0.82 | 2.92 | 5.22 | 90.77 |
| 50 ml | 14 | 0.25 | 0.84 | 2.69 | 5.23 | 91.00 |

| Analyse der Reaktionsmasse: | | | | | | |
|---|---|---|---|---|---|---|
| Element | Al | Ca | Fe | Cu | Zn | Sn |
| Gehalt (%) | 0.11 | 0.024 | 0.28 | 1.20 | 0.258 | 0.0024 |

### Beispiel 3 b: Zumischung von 50 % gesammelter Kontaktmasse

| Anspringzeit | | 13 Minuten | | | | |
|---|---|---|---|---|---|---|
| Rohsilanfraktion | Bildungszeit (Minuten) | Silan HM2 (%) | Silan HM (%) | Silan M3 (%) | Silan M1 (%) | Silan M2 (%) |
| 10 ml | 29 | 0.76 | 2.84 | 4.23 | 10.04 | 82.11 |
| 20 ml | 18 | 0.44 | 1.33 | 3.16 | 6.14 | 88.94 |
| 30 ml | 18 | 0.36 | 0.90 | 3.20 | 5.64 | 89.90 |
| 40 ml | 19 | 0.30 | 0.74 | 3.14 | 5.35 | 90.47 |
| 50 ml | 17 | 0.29 | 0.68 | 3.18 | 5.30 | 90.55 |

| Analyse der Reaktionsmasse: | | | | | | |
|---|---|---|---|---|---|---|
| Element | Al | Ca | Fe | Cu | Zn | Sn |
| Gehalt (%) | 0.12 | 0.027 | 0.30 | 1.40 | 0.290 | 0.0028 |

### Beispiel 3 c: Zumischung von 75 % gesammelter Kontaktmasse

| Anspringzeit | | 8 Minuten | | | | |
|---|---|---|---|---|---|---|
| Rohsilanfraktion | Bildungszeit (Minuten) | Silan HM2 (%) | Silan HM (%) | Silan M3 (%) | Silan M1 (%) | Silan M2 (%) |
| 10 ml | 12 | 0.79 | 4.83 | 4.12 | 11.34 | 78.92 |
| 20 ml | 17 | 0.47 | 1.93 | 2.45 | 5.24 | 89.91 |
| 30 ml | 16 | 0.40 | 1.27 | 2.60 | 4.91 | 90.81 |
| 40 ml | 17 | 0.38 | 1.15 | 2.60 | 4.76 | 91.12 |
| 50 ml | 15 | 0.35 | 1.00 | 2.69 | 4.81 | 91.15 |

| Analyse der Reaktionsmasse: | | | | | | |
|---|---|---|---|---|---|---|
| Element | Al | Ca | Fe | Cu | Zn | Sn |
| Gehalt (%) | 0.13 | 0.025 | 0.29 | 1.42 | 0.228 | 0.0019 |

## Patentansprüche

1. Verfahren zur Direktsynthese von Methylchlorsilanen durch Umsetzung von Methylchlorid mit Kontaktmasse, welche Silicium, Kupferkatalysator und Promotoren umfaßt, bei dem unter Ausschluß von Sauerstoff aufbewahrte Kontaktmasse zugesetzt wird, dadurch gekennzeichnet, daß die zugesetzte Kontaktmasse während einer Produktionskampagne mit hoher Selektivität bezüglich Dimethyldichlorsilan und hoher Reaktivität bezogen auf die Summe der gebildeten Methylchlorsilane gesammelt worden ist.

2. Verfahren nach Anspruch 1, bei dem die gesammelte Kontaktmasse gegebenenfalls im Gemisch mit frischer Kontaktmasse beim Start einer neuen Produktionskampagne vorgelegt wird.

3. Verfahren nach einem der Ansprüche 1 oder 2, bei dem während der Produktionsphase einer Produktionskampagne zuvor gesammelte Kontaktmasse, gegebenenfalls zusammen mit frischer Kontaktmasse nachgeschleust wird.

4. Verfahren nach einem der Ansprüche 1 bis 3, bei dem ein Gemisch aus 10 bis 90 Gew.-% gesammelter Kontaktmasse bezogen auf die gesamte eingesetzte Kontaktmasse eingesetzt wird.

5. Verfahren nach einem der Ansprüche 1 bis 4, bei dem die gesammelte Kontaktmasse einer Produktionskampagne unter Stickstoff, Argon, Methylchlorid oder Wasserstoff gelagert wird.

## Claims

1. Process for the direct synthesis of methylchlorosilanes by reacting methyl chloride with catalytic composition comprising silicon, copper catalyst and promoters, wherein, with exclusion of oxygen, stored catalytic composition is added, characterized in that the catalytic composition added was collected during a production campaign with high selectivity in respect of dimethyldichlorosilane and high reactivity based on the sum of the methylchlorosilanes formed.

2. Process according to Claim 1, wherein the catalytic composition collected, if appropriate in admixture with fresh catalytic composition, is initially charged at the start of a new production campaign.

3. Process according to either of Claims 1 and 2, wherein further previously collected catalytic composition, if appropriate together with fresh catalytic composition, is added during the production phase of a production campaign.

4. Process according to any of Claims 1 to 3, wherein a mixture comprising from 10 to 90% by weight of collected catalytic composition is used, based on the total amount of catalytic composition used.

5. Process according to any of Claims 1 to 4, wherein the catalytic composition collected from a production campaign is stored under nitrogen, argon, methyl chloride or hydrogen.

## Revendications

1. Procédé de synthèse directe de méthylchlorosilanes par réaction du chlorure de méthyle avec une composition catalytique comprenant du silicium, un catalyseur au cuivre et des promoteurs, dans lequel on ajoute une composition catalytique conservée à l'abri de l'oxygène, caractérisé en ce que la composition catalytique ajoutée est recueillie durant une campagne de production ayant une sélectivité élevée vis-à-vis du diméthyldichlorosilane et une réactivité élevée par rapport à la somme des méthylchlorosilanes formés.

2. Procédé selon la revendication 1, dans lequel la composition catalytique recueillie est introduite initialement au début d'une nouvelle campagne de production, éventuellement en mélange avec une composition catalytique fraîche.

3. Procédé selon l'une quelconque des revendications 1 ou 2, dans lequel une composition catalytique recueillie préalablement est ajoutée ultérieurement durant la phase de production d'une campagne de production, éventuellement conjointement avec une composition catalytique fraîche.

4. Procédé selon l'une quelconque des revendications 1 à 3, dans lequel on utilise un mélange de 10 à 90% en poids de la composition catalytique recueillie, par rapport à la composition catalytique totale employée.

5. Procédé selon l'une quelconque des revendications 1 à 4, dans lequel la composition catalytique recueillie d'une campagne de production est stockée sous azote, argon, chlorure de méthyle ou hydrogène.
